# EUROPEAN PATENT APPLICATION

(11) **EP 2 554 241 A1**
(43) Date of publication of application: **06.02.2013**
(21) Application number: 11759212.1
(22) Date of filing: 10.03.2011
(51) Int. Cl.: B01D 53/14, B01D 53/62, B01J 3/00, C01B 31/20

(54) **CARBON DIOXIDE SEPARATION UNIT AND CARBON DIOXIDE SEPARATION METHOD**

(30) Priority: 26.03.2010 JP 2010072995
(71) Applicant: Mitsui Engineering & Shipbuilding Co., Ltd., Chuo-ku Tokyo 104-8439 (JP)
(72) Inventor: MIYAGAWA, Mitsuru, Ichihara-shi Chiba 290-8531 (JP); MATSUO, Kazuyoshi, Ichihara-shi Chiba 290-8531 (JP); SAKURAI, Souichiro, Ichihara-shi Chiba 290-8531 (JP); SAKAI, Masakazu, Tokyo 104-8439 (JP)
(74) Representative: Grünecker, Kinkeldey, Stockmair & Schwanhäusser
(86) International application number: PCT/JP2011/055642
(87) International publication number: WO 2011/118405

(57) **Abstract**

[Problem to he solved] The problem is to provide a carbon dioxide separator that, when hydrating carbon dioxide contained in a gas to be treated to separate, can separate carbon dioxide from the gas to be treated at high efficiency and a method therefor. For this, a carbon dioxide separator that includes: a carbon dioxide hydrate formation part where carbon dioxide hydrate is formed with a gas to be treated containing carbon dioxide and water as a raw material; and a carbon dioxide absorption part where high pressure gas that passed through the carbon dioxide hydrate formation part without being hydrated is brought into gas-liquid contact with water to let absorb carbon dioxide in the high pressure gas, in which water in the carbon dioxide absorption part is sent to the carbon dioxide hydrate formation part as the raw material water is provided.

## Description

### Field of the Invention

The present invention relates to a separation unit of carbon dioxide contained in a gas to be treated such as a combustion exhaust gas or a process gas, and a method for separating carbon dioxide.

### Background Art

An integrated gasification combined cycle (IGCC) is gathering an attention as a power generation method where coal is gasified, and a gas turbine and a steam turbine are used in combination to generate electricity by efficiently converting coal into energy. In the IGCC, a process gas containing carbon dioxide (CO₂) and hydrogen (H₂) is formed, carbon dioxide is separated from the process gas, H₂ gas is burned in the gas turbine to generate electricity, and, in the gas turbine, vapor produced when H₂ gas is burned in the gas turbine is used to generate power at the steam turbine. A mixing ratio of carbon dioxide and hydrogen in the process gas is generally about 4:6.

Examples of technologies that separate carbon dioxide contained in combustion exhaust gas and process gas in power generating systems such as the IGCC and coal fired power generation, steel plants, and cement plants include a chemical absorption method, a PSA method (physical adsorption method), a membrane-separation method, and a physical absorption method. In patent document 1, for example, a physical absorption method where carbon dioxide is dissolved in high-pressure water is used.

Further, a hydrate separation method (see patent document 2, for example) that separates carbon dioxide from a gas to be treated by hydrating carbon dioxide in the gas to be treated such as the combustion exhaust gas and the process gas is the cleanest method in the point that carbon dioxide can be separated by using only water and is gathering attention.

A formation condition of gas hydrate is different depending on the kind of gas to be hydrated. However, the forming condition is generally high pressure and low temperature condition. In the case of carbon dioxide hydrate, though different depending on a concentration of carbon dioxide in a gas to be treated, it is formed under the condition of pressure of 5 MPa to 20 MPa and temperature of 0°C to 4°C, for example.
On the other hand, it is known that carbon dioxide is very high in the solubility in water in comparison with the solubility of other gas components (hydrogen, nitrogen, etc.) contained in the gas to be treated, and the higher the solubility is as the higher the pressure is and the lower the temperature is.

From what was described above, when carbon dioxide (gas) contained in the gas to be treated forms gas hydrate with the inside of a reactor maintained in the high pressure and low temperature condition, simultaneously with formation of hydrate in the reactor, carbon dioxide is dissolved to lower the partial pressure of carbon dioxide, thereby formation of hydrate is stopped. That is, carbon dioxide flows out of the reactor in a gaseous state (not contained in a liquid phase), and thus separation efficiency of carbon dioxide is deteriorated.
On the other hand, in order to resolve a decrease in partial pressure of carbon dioxide owing to dissolution of carbon dioxide in the reactor, the pressure in the reactor can be made higher. However, in this case, an increase in compression power of gas and an increase in a reactor manufacturing cost are caused to result in a problem in that a recovery cost of carbon dioxide increases.

### Conventional art documents

### Patent document

Patent document 1 : JP4088632
Patent document 2 : JP2005-179629 A

### Summary of the Invention

### Problem to be Solved by the Invention

In view of problems described above, the present invention intends to provide a carbon dioxide separator, which, upon hydrating and separating carbon dioxide contained in a gas to be treated, can efficiently separate carbon dioxide from the gas to be treated, and a method thereof.

### Means for Solving the Problem

In order to achieve the above-described object, a carbon dioxide separator related to a first aspect of the present invention is characterized by including; a carbon dioxide hydrate formation part where carbon dioxide hydrate is formed with a gas to be treated containing carbon dioxide and water as a raw material and a carbon dioxide absorption part where high pressure gas that passed the carbon dioxide hydrate formation part without forming gas hydrate is brought into gas liquid contact with water to let absorb carbon dioxide in the high pressure gas, in which water in the carbon dioxide absorption part is sent to the carbon dioxide hydrate formation part as the raw material water.

According to the present aspect, a gas to be treated, which still contains much carbon dioxide that passed through the carbon dioxide hydrate formation part without being hydrated, is brought into gas-liquid contact with water in the carbon dioxide absorption part in a high pressure state. Accordingly, carbon dioxide can be further absorbed (dissolved) in water from the gas to be treated and removed.
In addition, the "water that absorbed carbon dioxide" is sent to the carbon dioxide hydrate formation part as a raw material. Accordingly, when gas containing carbon dioxide is newly sent in the carbon dioxide hydrate formation part, in water as a raw material, carbon dioxide has been much dissolved after passing through an absorbing step under the high pressure. Accordingly, carbon dioxide in a gas to be treated which has been newly sent in can be hardly dissolved in water. As a result, pressure inside of the carbon dioxide hydrate formation part can be inhibited from becoming low to result in inhibiting the formation efficiency of carbon dioxide hydrate from deteriorating.
From what was described above, when the carbon dioxide absorption part is disposed, carbon dioxide can be readily separated at a high efficiency from a gas to be treated containing carbon dioxide.

A carbon dioxide separator related to a second aspect of the present invention further includes, in the first aspect, a gas hydrate decomposition part that receives the carbon dioxide hydrate to decompose to re-gasify, and a carbon dioxide release part that receives water obtained by the re-gasification at the gas hydrate decomposition part and releases carbon dioxide dissolved in the water, in which water passed through the carbon dioxide release part is sent to the carbon dioxide absorption part.

According to the present aspect, water obtained by decomposing carbon dioxide hydrate is sent to the carbon dioxide absorption part after a release treatment of carbon dioxide at a carbon dioxide release part. Accordingly, water sent to a carbon dioxide absorption part has released carbon dioxide at the former stage, that is, at a carbon dioxide release part; accordingly, the water has recovered absorbing capacity of carbon dioxide. When the water is sent in a carbon dioxide absorption part, water in the carbon dioxide absorption part is diluted; accordingly, with newly addition of water to the carbon dioxide absorption part kept at the lower limit, the carbon dioxide absorbing capacity can be maintained in a high state.
Accordingly, when the carbon dioxide release part is provided, absorbing capacity of carbon dioxide at the carbon dioxide absorption part can be realized to maintain readily and at a low cost.

A carbon dioxide separator related to a third aspect of the present invention is characterized in that, in a second aspect, a dehydrator that is disposed between the carbon dioxide hydrate formation part and the gas hydrate decomposition part and dehydrates a slurry of the carbon dioxide hydrate is further provided, in which water obtained by dehydration at the dehydrator is sent to the carbon dioxide hydrate formation part.

Water obtained by dehydrating at the dehydrator in the present aspect, that is, water obtained by dehydrating a slurry of carbon dioxide hydrate formed in the carbon dioxide hydrate formation part dissolves carbon dioxide much. Further, also a liquid temperature is hardly different from that inside of the carbon dioxide hydrate formation part
Accordingly, according to the present aspect, without causing a problem of a pressure decrease due to dissolution of carbon dioxide in water in the carbon dioxide hydrate formation part and with an increase in energy for cooling raw material water suppressing, water as a raw material can be efficiently supplied.

A carbon dioxide separator related to a fourth aspect of the present invention is characterized in that, in the third aspect, the carbon dioxide absorption part and the dehydrator are set at the pressure the same as that of the carbon dioxide hydrate formation part.

Here, "the same pressure" may be "the same" in a level that enables to send water in the carbon dioxide absorption part or water passed through the dehydrator to the carbon dioxide hydrate formation part without going through a compressor such as a pump, that is, may not be strictly the same.
According to the present aspect, while suppressing an increase in energy for rendering the inside of the carbon dioxide hydrate formation part high pressure satisfying hydrate forming condition, water as a raw material can be effectively supplied.

A carbon dioxide separator related to a fifth aspect of the present invention is characterized in that, in any one of the first to fourth aspects, a compressor is disposed on an upper stream side of the gas hydrate formation part to control a gas containing the carbon dioxide to predetermined pressure, in which as power of the compressor, pressure energy of high pressure gas passed through the carbon dioxide absorption part is utilized.

The pressure condition for forming carbon dioxide hydrate is high pressure; accordingly, the gas to be treated is, after pressurizing by a compressor, supplied to a gas hydrate formation part in a high-pressure state.
Then, the gas to be treated, which has not been hydrated via the step of forming carbon dioxide hydrate in the gas hydrate formation part, is sent from the gas hydrate formation part to the carbon dioxide absorption part in a high-pressure state, released from the carbon dioxide absorption part in a high-pressure state and recovered.

According to the present aspect, after carbon dioxide in a gas to be treated is hydrated and separated, pressure energy of a high pressure gas from which carbon dioxide is separated further in a carbon dioxide absorption part is utilized as power of the compressor, thereby consumption energy in the compressor can be reduced. Accordingly, an operation cost of a whole apparatus can be reduced.

A method for separating carbon dioxide according to a sixth aspect of the present invention includes the steps of: forming carbon dioxide hydrate with a gas to be treated containing carbon dioxide and water as a raw material; letting water absorb carbon dioxide by bringing high pressure gas passed without being hydrated in the step of forming carbon dioxide hydrate into gas-liquid contact with water; and sending water formed in the step of absorbing carbon dioxide to the step of generating carbon dioxide hydrate as the raw material water.

According to the present aspect, an advantage the same as that of the first aspect is exerted, and carbon dioxide can be separated at high efficiency from a gas to be treated containing carbon dioxide.

A method for separating carbon dioxide according to a seventh aspect of the present invention is characterized by including, in the sixth aspect, the steps of decomposing gas hydrate, where the carbon dioxide hydrate is received, decomposed, and re-gasified; releasing carbon dioxide, where water obtained in the step of decomposing gas hydrate is received and carbon dioxide dissolved in the water is released; and sending water obtained in the step of releasing carbon dioxide to the step of absorbing carbon dioxide.

According to the present aspect, an advantage the same as that of the second aspect can be exerted, water can be efficiently supplied over an entire step of separating carbon dioxide, and carbon dioxide can be separated from a gas to be treated at high efficiency and at low cost.

### Effect of the Invention

According to the present invention, when carbon dioxide contained in a gas to be treated is hydrated and separated, necessary consumption energy can be reduced and operation cost of an apparatus can be reduced.

### Brief Description of the Drawings

FIG. 1 is a schematic block diagram showing a carbon dioxide separator related to example 1.
FIG. 2 is a schematic block diagram showing a carbon dioxide separator related to example 2.
FIG. 3 is a schematic block diagram showing a carbon dioxide separator related to example 3.
FIG. 4 is a schematic block diagram showing a carbon dioxide separator related to example 4.
FIG. 5 is a schematic block diagram showing a carbon dioxide separator related to example 5.
FIG. 6 is a schematic block diagram showing a carbon dioxide separator that is used in a test of a comparative example.
FIG. 7 is a diagram showing test results of example 5 and a comparative example.

### Embodiment of the Invention

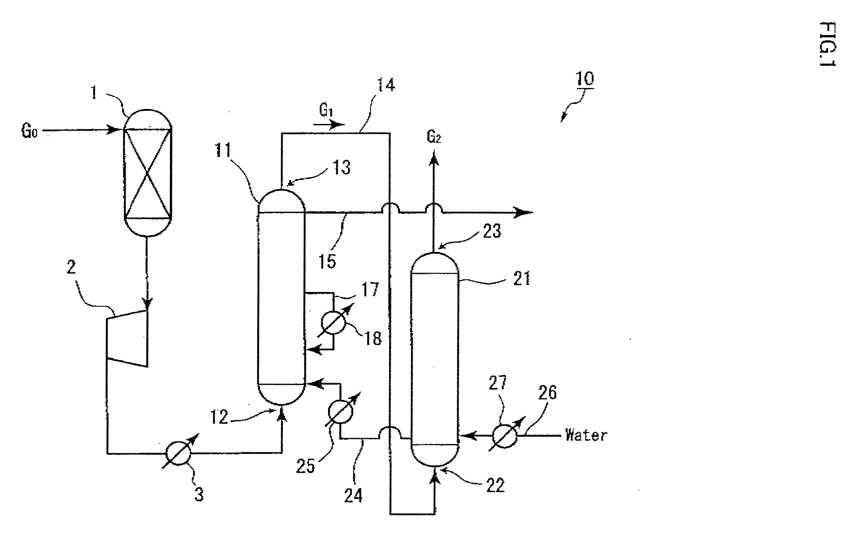

In what follows, the present invention will be more detailed with reference to examples. However, the present invention is not restricted to these examples. FIG. 1 is a schematic block diagram showing an example of a carbon dioxide separator related to example 1.

### [Example 1]

A carbon dioxide separator 10 related to the present example includes a carbon dioxide hydrate formation part 11 that formes carbon dioxide hydrate from a gas to be treated G₀ containing carbon dioxide and water as a raw material.
The gas to be treated G₀ is, after conditioned to predetermined temperature and pressure (6 to 9 MPa and 1 to 2°C, for example) by a compressor 2 and a cooler 3, introduced from an inlet of a gas to be treated 12 disposed under the carbon dioxide hydrate formation part 11 into the inside of the carbon dioxide hydrate formation part 11. When the pressure of the gas to be treated G₀ is high, the compressor 2 can be eliminated. Further, in order to remove moisture contained in the gas to be treated G₀, a dehydrator 1 tor the gas to be treated is preferably disposed prior to the carbon dioxide hydrate formation part 11.

The inside of the carbon dioxide hydrate formation part 11 is set to predetermined pressure and temperature where carbon dioxide hydrate is formed (6 to 9 MPa and 2 to 4°C, for example), and inside of the carbon dioxide hydrate formation part 11, the step ot forming carbon dioxide hydrate with carbon dioxide contained in the gas to be treated G₀ and water as a raw material.

The step of forming gas hydrate in the gas hydrate formation part 11 can be conducted according to a known method such as a bubbling method where fine gas bubbles are blown into water and a spray method where water is sprayed into gas. In particular, the bubbling method is preferred because it is excellent in a gas-liquid contact efficiency and is able to efficiently form a targeted gas hydrate. Carbon dioxide hydrate obtained according to the bubbling method, and the spray method, or Lhe like is obtained in a state of slurry.

A carbon dioxide hydrate slurry formed at the carbon dioxide hydrate formation part 11 is exhausted outside of a system from a line 15. Then, high pressure gas G₁ passed through the carbon dioxide hydrate formation part 11 without being hydrated is exhausted from a thigh pressure gas exhaust 13 disposed at an upper portion of the carbon dioxide hydrate formation part 11 and introduced via a line 14 into a carbon dioxide absorption part 21 described below.

Inside of the carbon dioxide absorption part 21, water is supplied from a line 26, and the high pressure gas G₁ is introduced from a high pressure gas inlet 22 disposed at a lower portion of the carbon dioxide absorption part 21 into the carbon dioxide absorption part 21. When the high pressure gas G₁ and water are brought into gas-liquid contact in the carbon dioxide absorption part 21, carbon dioxide in the high pressure gas G₁ can be absorbed by water (step of absorbing carbon dioxide).

The inside of the carbon dioxide absorption part 21 is preferred to be set to pressure and temperature the same as those of the carbon dioxide hydrate formation part 11. The "same pressure" may be the "same" to a level that enables to send water in the carbon dioxide absorption part 21 to the carbon dioxide hydrate formation part 11 without via a pressure devise such as a pump. That is, the "same" does not have to be strictly the same. Thereby, while suppressing an increase in energy for making the inside of a carbon dioxide hydrate formation part 11 high pressure that satisfies the hydrate forming condition, water as a raw material can be effectively supplied.

Water that has absorbed carbon dioxide in the high pressure gas G₁ in the carbon dioxide absorption part 21 is sent via a line 24 Lo Lhe carbon dioxide hydrate formation part 11 as the raw material water. That is, water generated in the step of absorbing carbon dioxide is sent as the raw material water to the step of forming carbon dioxide hydrate. Further, high pressure gas G₂ obtained by further removing carbon dioxide from the high pressure gas G1 is exhausted from a high pressure gas exhaust 23 disposed in an upper portion of the carbon dioxide absorption part 21 and recovered.

At the time of forming carbon dioxide hydrate, heat of formation of 65.2 kJ/mol of carbon dioxide is generated. In order to inhibit a temperature inside of the carbon dioxide hydrate formation part 11 from rising owing to the heat of formation and to maintain the inside of the carbon dioxide hydrate formation part 11 at a predetermined temperature (2 to 4°C, for example), it is desirable to provide a cooler 25 to the line 24 to return water (1 to 2°C, for example) cooled to a temperature lower than a temperature inside of the carbon dioxide hydrate formation part 11 to the carbon dioxide hydrate formation part 11.
Further, it is desirable to provide a line 17 that extracts water of the carbon dioxide hydrate formation part 11 and circulates to cool the extracted water with a cooler 18, for example, to about 1 to 2°C.

Next, effects of a carbon dioxide separator 10 and a method for separating carbon dioxide, which uses the carbon dioxide separator 10 will be described.
According to a carbon dioxide separator 10 related to the present invention, a gas to be treated, which has passed through a carbon dioxide hydrate formation part 11 without being hydrated and still contains much carbon dioxide, that is, high pressure gas G₁ is brought into gas-liquid contact with water inside of a carbon dioxide absorption part 21 in a state of high pressure; accordingly, carbon dioxide can be further absorbed (dissolved) in water from the high pressure gas G₁ and removed.

In addition, the "water that absorbed carbon dioxide" is sent to the carbon dioxide hydrate formation part 11 as a raw material. Accordingly, when a gas containing carbon dioxide (gas to be treated G₀) is newly sent in the carbon dioxide hydrate formation part 11, carbon dioxide is already much dissolved in raw material water as it has gone through the absorbing step in the high pressure state. Accordingly, carbon dioxide in the gas to be treated G₀ newly sent in the carbon dioxide hydrate formation part 11 can hardly be dissolved in raw material water. As a result, pressure inside of the carbon dioxide hydrate formation part 11 is inhibited from decreasing, thereby the formation efficiency of carbon dioxide hydrate can be inhibited from deteriorating.
As obvious from what was described above, it can be readily realized to separate carbon dioxide at high efficiency from a gas to be treated Go containing carbon dioxide when the carbon dioxide absorption part 21 is disposed.

### [Example 2]

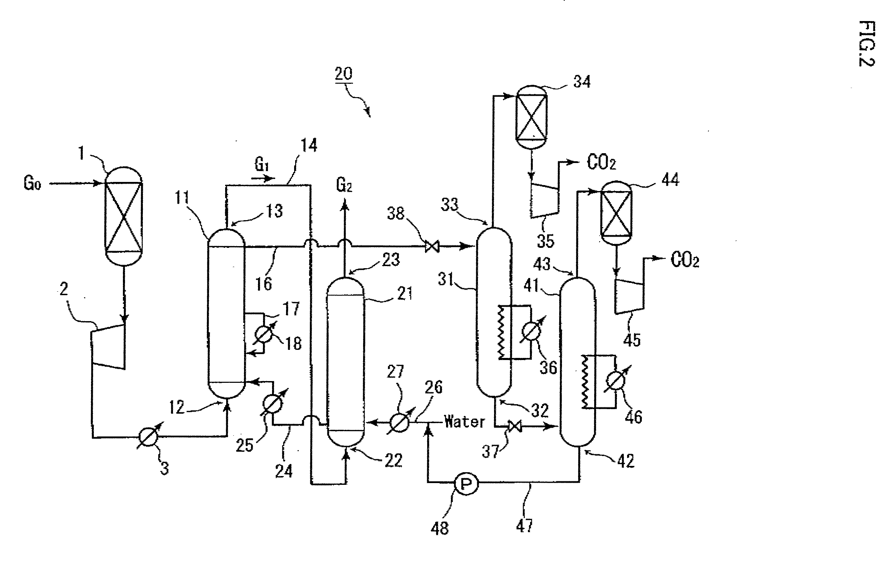

In the next place, another example of a carbon dioxide separator related to the present invention will be described. FIG. 2 is a schematic block diagram showing a carbon dioxide separator 20 related to example 2. Like characters represent like members as those of example 1, and description thereof will be omitted.
A carbon dioxide separator 20 related to the present example includes, similarly to the example 1, a carbon dioxide hydrate formation part 11 and a carbon dioxide absorption part 21, further on a downstream side thereof, a gas hydrate decomposition part 31 and a carbon dioxide release part 41.

A slurry of carbon dioxide hydrate formed in the carbon dioxide hydrate formation part 11 is introduced via a line 16 into the gas hydrate decomposition part 31. In the gas hydrate decomposition part 31, a step of decomposing and re-gasifying carbon dioxide hydrate formed in the carbon dioxide hydrate formation part 11 is conducted. The re-gasification of carbon dioxide hydrate can be conducted by setting the inside of the gas hydrate decomposition part 31 to a predetermined pressure and a predetermined temperature.

When the pressure inside of the gas hydrate decomposition part 31 is set at about 4 MPa, for example, a temperature inside of the gas hydrate decomposition part 31 is set at about 10°C. The gas hydrate decomposition part 31 has a heater 36, and the heater 36 supplies heat.
A heat of decomposition necessary for decomposing carbon dioxide hydrate is 65.2 kJ/mol of carbon dioxide. Accordingly, as the heater 36, a heater where seawater of about 10 to 15°C, for example, or a low temperature exhaust heat generated from a chemical plant is circulated can be used.

When carbon dioxide hydrate is decomposed, re-gasified carbon dioxide and water generated by decomposition of hydrate are generated. The water is exhausted from a decomposed water exhaust 32 disposed at a lower portion of the gas hydrate decomposition part 31 and sent to a carbon dioxide release part 41 described below.
Further, the re-gasified carbon dioxide is exhausted from a gas exhaust 33. The carbon dioxide exhausted from the gas exhaust 33 is, after dehumidified with a dehumidifier 34, pressurized by a compressor 35 to the pressure (10 to 15 MPa, for example) necessary to be transported by a pipe-line.

Next, the carbon dioxide release part 41 will be described. The carbon dioxide release part 41 conducts a step of releasing carbon dioxide in which the carbon dioxide release part 41 receives water obtained by re-gasifying at the gas hydrate decomposition part 31 and releases carbon dioxide dissolved in the water. The carbon dioxide release part 41 has a heater 46 and can release carbon dioxide dissolved in water obtained by the re-gasification by setting the inside of the carbon dioxide release part 41 to predetermined pressure and a predetermined temperature.

when the pressure inside of the carbon dioxide release part 41 is set to 0.2 to 0.5 MPa, for example, a temperature inside of the carbon dioxide release part 41 is set to about 10°C.
Upon releasing carbon dioxide contained in water, heat release of about 20 kJ/mol of carbon dioxide is necessary. Accordingly, as the heater 46, a heater where seawater of about 10 to 15°C, for example, or a low temperature exhaust heat generated from a chemical plant is circulated can be used.

Then, water passed through the carbon dioxide release part 41, that is, water from which carbon dioxide is released and removed is exhausted from a water exhaust 42 disposed at a lower portion of the carbon dioxide release part 41 and sent via a line 47 to the carbon dioxide absorption part 21. It is desirable that the line 47 is converged with a line 26 that newly supplies water to the carbon dioxide absorption part 21, and water is cooled by a common cooler 27 and sent to the carbon dioxide absorption part 21.
Further, carbon dioxide released from the water is exhausted from a gas exhaust 43. Carbon dioxide exhausted from the gas exhaust 43 is, after dehumidified by a dehumidifier 44, pressurized by a compressor 45 to the pressure (10 to 15 MPa, for example) necessary to be transported by pipe-line.
In FIG. 2, reference numerals 37 and 38 denote a valve, and reference numeral 48 denotes a pump. Further, also to other lines connecting the respective constituent parts, a valve or a pump can be appropriately disposed (omitted in the drawing).

According to the present example, water obtained by decomposing carbon dioxide hydrate is sent to the carbon dioxide absorption part 21 via release of carbon dioxide at a carbon dioxide release part 41. Accordingly, water sent to a carbon dioxide absorption part 21 has recovered the absorption capacity of carbon dioxide because the water has released carbon dioxide at the carbon dioxide release part 41 of the former step. When the water is sent into a carbon dioxide absorption part 21, water in the carbon dioxide absorption part 21 is diluted. Accordingly, by making an addition of new water to the carbon dioxide absorption part 21 the minimum, the carbon dioxide absorption capacity can be maintained at a high state.
Accordingly, by providing the carbon dioxide release part 41, the absorption capacity of carbon dioxide at a carbon dioxide absorption part can be realized readily and at low cost.

### [Example 3]

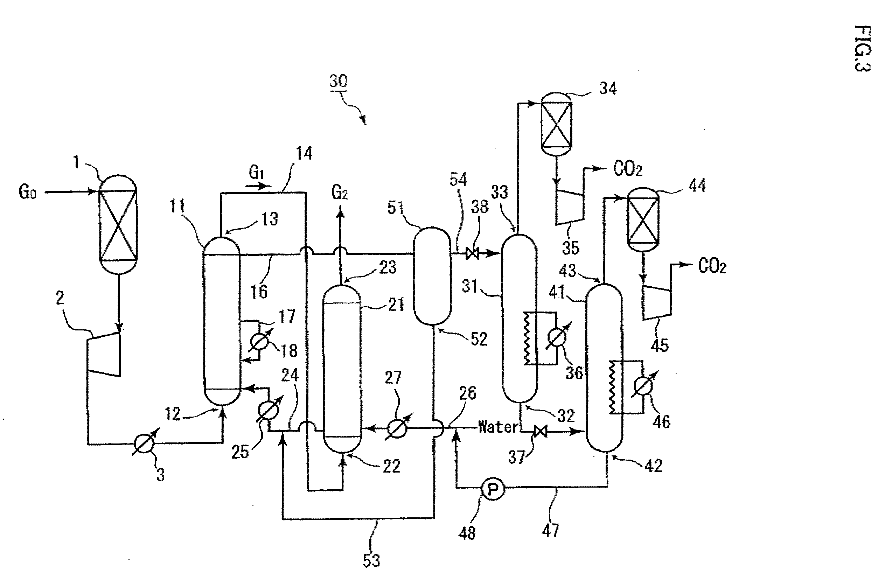

Next, still another example of a carbon dioxide separator related to the present invention will be described. FIG. 3 is a schematic block diagram showing a carbon dioxide separator 30 related to example 3. Like characters represent like members as those of example 2, and description thereof will be omitted.
A carbon dioxide separator 30 related to the present example includes, similarly to the example 2, a carbon dioxide hydrate formation part 11, a carbon dioxide absorption part 21, a gas hydrate decomposition part 31 and a carbon dioxide release part 41, further a dehydrator 51 between the carbon dioxide hydrate formation part 11 and the gas hydrate decomposition part 31.

In the carbon dioxide hydrate formation part 11, carbon dioxide in a gas to be treated G₀ is hydrated to form a carbon dioxide hydrate slurry. In order to efficiently separate carbon dioxide in the gas to be treated G₀, a water content of the carbon dioxide hydrate slurry is preferable to be 50 to 95% by weight.
The gas hydrate slurry is sent via a line 16 from the carbon dioxide hydrate formation part 11 to the dehydrator 51 for a step of dehydration. In the step of dehydration, it is preferable that a carbon dioxide hydrate slurry having the water content of 50 to 95% by wight is dehydrated to an extent of the water content of about 25 to 60% by weight, for example. The dehydrated carbon dioxide hydrate is sent via a line 54 to a gas hydrate decomposition part 31.

On the other hand, water dehydrated at the dehydrator 51 is exhausted from a water exhaust 52 disposed at a lower portion of the dehydrator 51 and sent via a line 53 to a carbon dioxide hydrate formation part 11. At this time, it is desirable that the line 53 and line 24 (a line that sends water that has absorbed carbon dioxide in high pressure gas G₁ in a carbon dioxide absorption part 21 to a carbon dioxide hydrate formation part 11) are converged, and water cooled by a cooler 25 to a temperature lower than a temperature inside of the carbon dioxide hydrate formation part 11 is returned to the carbon dioxide hydrate formation part 11.

Water obtained by dehydrating at the dehydrator 51, that is, water obtained by dehydrating a scurry of carbon dioxide hydrate formed at a carbon dioxide hydrate formation part 11 dissolves carbon dioxide much. Further, also a liquid temperature is hardly different from that of the inside of a carbon dioxide hydrate formation part 11. Accordingly, without causing a problem of pressure decrease due to dissolution of carbon dioxide in water in the carbon dioxide hydrate formation part 11, and while suppressing an increase in energy for cooling raw material water, raw material water can be effectively supplied.

Further, it is desirable that the pressure inside of the dehydrator 51 is, similarly to the carbon dioxide absorption part 21, set to the pressure the same as that of the carbon dioxide hydrate formation part 11. Thereby, while suppressing an increase in energy for making the inside of the carbon dioxide hydrate formation part 11 high pressure satisfying the hydrate forming condition, raw material water can be effectively supplied.

Here, when the dehydration capacity in a dehydrator 51 is enhanced, an amount of water (at about 1 to 2°C) removed from the carbon dioxide hydrate slurry increases, and an amount of water (at about 10°C) produced by decomposition of carbon dioxide hydrate in the gas hydrate decomposition part 31 decreases; accordingly, energy necessary (energy necessary for a cooler 25) for cooling water circulating to a carbon dioxide hydrate formation part 11 can be reduced. In addition, energy necessary for re-gasification (energy necessary in a heater 36) decreases when a slurry concentration becomes high.
On the other hand, when the dehydration capacity in the dehydrator 51 is enhanced, an amount of water contained in carbon dioxide hydrate that is sent to a gas hydrate decomposition part 31 decreases; accordingly, also an amount of water circulated via a carbon dioxide release part 41 to a carbon dioxide absorption part 21 decreases.

Accordingly, the dehydration capacity in the dehydrator 51 is desirably set by considering a balance between a reduction effect of the energy cost (energy necessary to cool water that is circulated to a carbon dioxide hydrate formation part 11 and thermal energy necessary to re-gasify) and a cost reduction effect that is made possible by reducing an amount of water newly supplied to the carbon dioxide absorption part 21 while securing an amount of water that is circulated from the carbon dioxide release part 41 to a carbon dioxide absorption part 21.

### [Example 4]

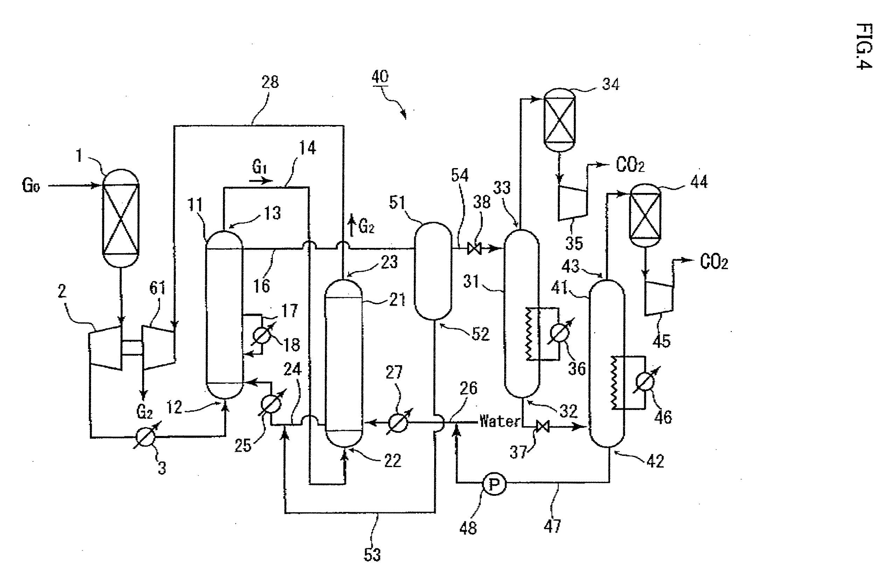

Next, still another example of a carbon dioxide separator related to the present invention will be described. FIG. 4 is a schematic block diagram showing a carbon dioxide separator 40 related to example 4. Like characters represent like members as those of example 3, and description thereof will be omitted.
A gas to be treated G₀ in the carbon dioxide separator 40 is, in a manner similar to that of examples 1 to 3, introduced into the carbon dioxide hydrate formation part 11 after setting to predetermined pressure (6 to 9 MPa, for example) by a compressor 2 disposed on an upper stream side of a carbon dioxide hydrate formation part 11.
Further, from a high pressure gas exhaust 23 of the carbon dioxide absorption part 21, high pressure gas G₂ obtained by further removing carbon dioxide from high pressure gas G₁ passed through a carbon dioxide hydrate formation part 11 is exhausted.

According to the present example, pressure energy of the high pressure gas G₂ exhausted from the carbon dioxide absorption part 21 is used as power of the compressor 2.
As shown in FIG. 4, for example, a power recovery part 61 such as a known gas expander (axial turbine) is disposed to a power shaft of the compressor 2, and, to the power recovery part 61, the high pressure gas G₂ exhausted from a high pressure gas exhaust 23 of the carbon dioxide absorption part 21 is sent via a line 28 to utilize the pressure energy of the high pressure gas G₂ as auxiliary power of the compressor 2.
Further, other than a configuration where a power recovery part 61 such as the gas expander is directly connected to a power shaft of the compressor 2 like the present example, a configuration where the gas expander is connected to a power generator to generate electricity, and the electricity can be used in a motor-driven compressor 2.

According to the present example, after carbon dioxide in a gas to be treated G₀ is hydrated and separated in the carbon dioxide hydrate formation part 11, the pressure energy of a high pressure gas G₂ from which carbon dioxide is further separated in the carbon dioxide absorption part 21 is utilized as power of the compressor 2, thereby consumption energy in the compressor 2 can be reduced. Accordingly, an operation cost of an entirety of carbon dioxide separator can be reduced.

### [Example 5]

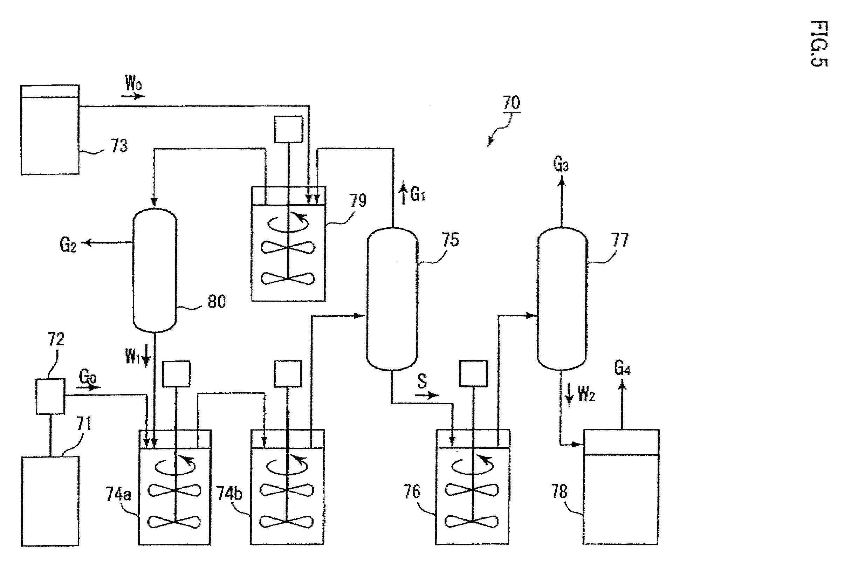

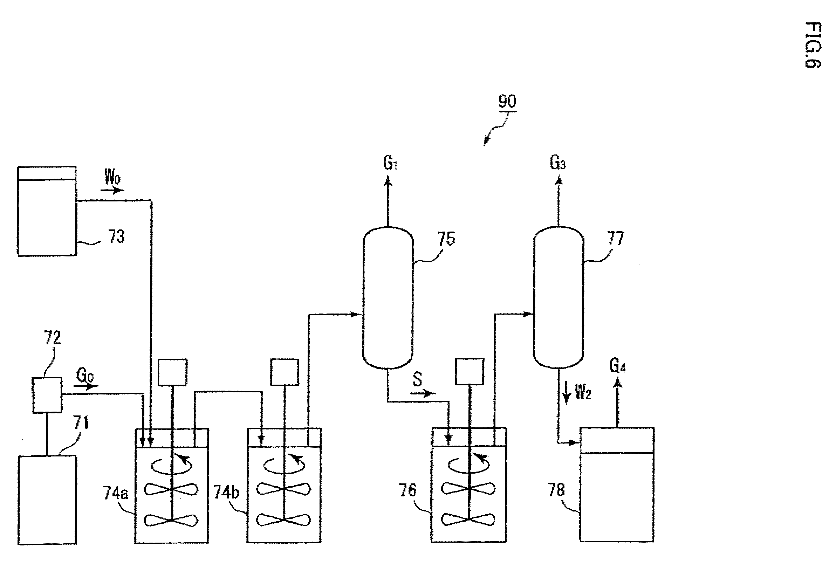

Next, a test for confirming a carbon dioxide separation ratio (hereinafter, referred to as CO₂ separation ratio in some cases) by a carbon dioxide separator related to the present invention was conducted. A carbon dioxide separator used for test is shown in FIGs. 5 and 6. FIG. 5 is a schematic block diagram showing a carbon dioxide separator related to example 5, and FIG. 6 is a schematic block diagram showing a carbon dioxide separator that is used as a comparative example and does not have a carbon dioxide absorption part.

A carbon dioxide separator 70 shown in FIG. 5 includes a carbon dioxide hydrate formation Lank 74a and a carbon dioxide hydrate formation tank 74b, that is, by two steps of reactors, carbon dioxide hydrate is formed. Into the carbon dioxide hydrate formation tank 74a that is a reactor on an upstream side, a gas to be treated G₀ is introduced from a mixed gas cylinder 71. A reference numeral 72 denotes a compressor.

Further, raw material water W₀ is supplied from a raw material water tank 73 to a carbon dioxide absorbing tank 79, and water W₁ separated from a gas component G₂ in a gas-liquid separator 80 is introduced into the carbon dioxide hydrate formation tank 74a.

A reference numeral 75 denotes a gas-liquid separator, and, after reactions in the carbon dioxide hydrate formation tank 74a and the carbon dioxide hydrate formation tank 74b, a carbon dioxide hydrated flurry S and a gas G₁ are separated.

The gas G₁ is introduced into the carbon dioxide absorbing tank 79, and, after CO₂ remaining in the gas G₁ is absorbed in raw material water W₀, exhausted as gas G₂.

The carbon dioxide hydrate slurry S separated at the gas-liquid separator 75 is sent to a hydrate decomposition tank 76 to conduct the step of decomposing gas hydrate. After the step of decomposing gas hydrate, CO₂ (gas G₃) formed by the step of decomposing by a gas-liquid separator 77 and water W₂ are separated, and the water W₂ is sent to a recovery water tank 78 as a carbon dioxide release part. In the recovery waster tank 78, a step of releasing CO₂ (gas G₄) dissolved in water W₂ is conducted.

A carbon dioxide separator 90 (FIG. 6) used in comparative example does not have a carbon dioxide absorption tank 79 and a gas-liquid separator part 80 in the carbon dioxide separator 70 shown in FIG. 5. Raw material water W₀ is directly introduced from the raw material water tank 73 into the carbon dioxide hydrate formation tank 74a.
In the carbon dioxide separator 70 and carbon dioxide separator 90, the water W₂ is not circulated.

With the carbon dioxide separator 70 related to example 5 like this and the carbon dioxide separator 90 related to a comparative example, a test for measuring a CO₂ separation ratio from a mixed gas was conducted.

### <Test Method>

A test that uses the carbon dioxide separator 70 (FIG. 5) related to example 5 was conducted as shown bellow. A gas to be treated G₀, which is a mixed gas of hydrogen and carbon dioxide (60%H₂ + 40%CO₂), was adjusted to a predetermined flow rate (105 to 420 NL/h, which changes depending on a gas-liquid ratio), and with a gas-liquid ratio at a carbon dioxide hydrate formation tank 74a set to 25, 50 and 100, respectively, a test was conducted. With the carbon dioxide hydrate formation tank 74a and carbon dioxide hydrate formation tank 74b set to pressure of about 6.0MPa and a temperature of 1 to 3°C, hydrate was formed.

Raw material water G₀, after adjusting to 4.2 L/h, was supplied via the carbon dioxide absorption tank 79 and the gas-liquid separator 80, to the carbon dioxide hydrate formation tank 74a. A liquid staying time in each of the carbon dioxide hydrate formation tank 74a and carbon dioxide hydrate formation tank 74b was 10 min.

In the hydrate decomposing tank 76, under the condition of pressure of about 0.5MPa and a temperature of about 15°C, a step of decomposing gas hydrate was conducted. A step of releasing carbon dioxide in the recovery water tank 78 was conducted with a temperature kept at about 15°C and with the pressure set to normal pressure. Or each of the gas G₂, gas G₃ and gas G₄, a flow rate was measured by use of a wet gas meter, and a gas composition analysis was conducted by gas chromatography.

In comparative example, by use of a carbon dioxide separator 90 (FIG. 6), a gas to be treated G₀ of the composition the same as that of example 5 was adjusted to a predetermined flow rate (105 to 420 NL/h, which changes depending on a gas-liquid ratio) and allowed to react with raw material water W₀ under the pressure and temperature condition the same as that of the example 5. Also a liquid staying time in each of the carbon dioxide hydrate formation tank 74a and carbon dioxide hydrate formation tank 74b was set to 10 min the same as that of example 5. In comparative example, a gas-liquid ratio in the carbon dioxide hydrate formation tank 74a was set to each of 25, 48, 50 and 100 and a test was conducted.

The raw material water W₀ was adjusted to 4.2 L/h and supplied directly to the carbon dioxide hydrate formation tank 74a. After the step of decomposing gas hydrate and the step of releasing carbon dioxide, in comparative example, of each of the gas G₁, gas G₃ and gas G₄, a flow rate was measured by use of a wet gas meter, and a gas composition analysis was conducted by gas chromatography.

### <Test Result>

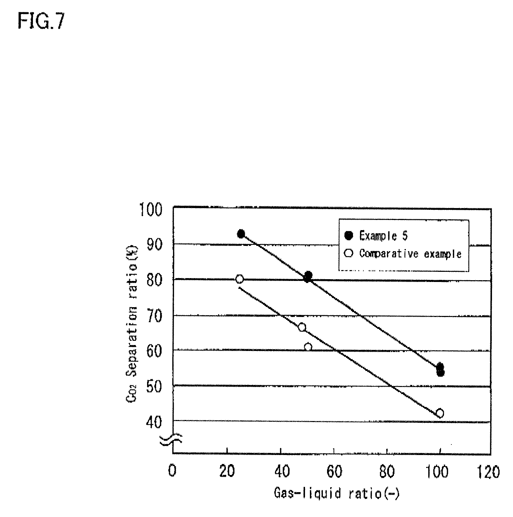

Test results of example 5 and the comparative example are shown in FIG. 7 and Table 1. In FIG. 7, a horizontal axis represents a gas-liquid ratio [= flow rate of gas Lo be treated G₀/flow rate of raw material water W₀], and a vertical axis represents a carbon dioxide separation ratio (%) [= (flow rate of CO₂ in the gas to be treated G₀ - flow rate of CO₂ in a gas composition after treatment/flow rate of CO₂ in the gas to be treated G₀ × 100]. The gas composition after the treatment is a gas G₂ in example 5 and a gas G₁ in the comparative example.

As shown in FIG. 7 and Table 1, in all gas-liquid ratios, example 5 has a CO₂ separation ratio higher than that of comparative example, and an improvement of about 15% by average in the CO₂ separation ratio was obtained.

**[Table 1]**

| | Gas-liquid ratio | CO₂ concentration (% by volume) | | CO₂ separation ratio (%) |
|---|---|---|---|---|
| | | Gas to be treated G₀ | Gas after treatment * | |
| Example 5 | 25 | 37.3 | 3.7 | 93.5 |
| | 50 | 37.3 | 10.1 | 80.7 |
| | 50 | 37.3 | 10.0 | 81.4 |
| | 100 | 37.3 | 20.9 | 54.6 |
| | 100 | 37.3 | 20.5 | 55.8 |
| Comparative example | 25 | 38.2 | 10.9 | 80.2 |
| | 48 | 38.5 | 18.2 | 67.1 |
| | 50 | 37.3 | 18.9 | 61.3 |
| | 100 | 38.5 | 27.6 | 42.7 |

| | | | | |
|---|---|---|---|---|
| * a gas G₂ in example 5 and a gas G₁ in the comparative example | | | | |

The present invention can be utilized in a separation unit of carbon dioxide and a separation method of carbon dioxide contained in a combustion exhaust gas or a process gas, for example, in steel plants, cement plants, and power generating systems such as the integrate gasification combined cycle (IGCC) and coal fired power generation.

## Claims

1. A carbon dioxide separator, comprising:
a carbon dioxide hydrate formation part where carbon dioxide hydrate is formed with a gas to be treated containing carbon dioxide and water as a raw material; and
a carbon dioxide absorption part where a high pressure gas that passed through the carbon dioxide hydrate formation part without being hydrated is brought into gas-liquid contact with water to let absorb carbon dioxide in the high pressure gas in water,
wherein water in the carbon dioxide absorption part is sent to the carbon dioxide hydrate formation part as the raw material water.

2. The carbon dioxide separator according to claim 1, further comprising:
a gas hydrate decomposition part that receives the carbon dioxide hydrate and decomposes to re-gasify; and
a carbon dioxide release part that receives water obtained by re-gasification at the gas hydrate decomposition part and releases carbon dioxide dissolved in the water,
wherein water passed through the carbon dioxide release part is sent to the carbon dioxide absorption part.

3. The carbon dioxide separator according to claim 2, further comprising:
a dehydrator that is disposed between the carbon dioxide hydrate formation part and the gas hydrate decomposition part and dehydrates a slurry of the carbon dioxide hydrate,
wherein water obtained by dehydration at the dehydrator is sent to the carbon dioxide hydrate formation part.

4. The carbon dioxide separator according to claim 3, wherein the carbon dioxide absorber and the dehydrator are set to the pressure the same as that of the carbon dioxide hydrate formation part.

5. The carbon dioxide separator according to any one of claims 1 to 4, further comprising:
a compressor that is disposed on an upper stream side of the gas hydrate formation part and controls pressure of a gas containing the carbon dioxide to predetermined pressure,
wherein as power of the compressor, pressure energy of a high pressure gas passed through the carbon dioxide absorption part is utilized.

6. A method for separating carbon dioxide comprising the steps of:
forming carbon dioxide hydrate with a gas to be treated containing carbon dioxide and water as a raw material;
absorbing carbon dioxide in a high pressure gas in water by bringing a high pressure gas passed without being hydrated in the step of forming carbon dioxide hydrate into gas-liquid contact with water; and
sending water generated in the step of absorbing carbon dioxide to the step of forming carbon dioxide hydrate as the raw material water.

7. The method for separating carbon dioxide according to claim 6, further comprising the steps of:
decomposing gas hydrate, where the carbon dioxide hydrate is received, decomposed and re-gasified;
releasing carbon dioxide, where water obtained in the step of decomposing gas hydrate is received and carbon dioxide dissolved in the water is released; and
sending water obtained in the step of releasing carbon dioxide to the step of absorbing carbon dioxide.
